# EUROPEAN PATENT APPLICATION

(11) **EP 4 779 041 A1**
(43) Date of publication of application: **22.07.2026**
(21) Application number: 25197224.6
(22) Date of filing: 21.08.2025
(51) Int. Cl.: C22B 3/00, B01D 15/36, C22B 3/26, C22B 3/42, C22B 1/00

(54) **METHOD FOR RECOVERING NICKEL AND COBALT USING DEEP EUTECTIC SOLVENT-BASED ION EXCHANGE SEPARATION**

(30) Priority: 17.01.2025 KR 20250007082
(71) Applicant: Seoul National University R & DB Foundation, Seoul 08826 (KR)
(72) Inventor: ABERDEEN, Stuart, 08826 Seoul (KR); CHOI, Sungyeol, 08826 Seoul (KR); FOSTER, Richard Ian, 08826 Seoul (KR); KIM, Kwangseo, 08820 Seoul (KR)
(74) Representative: Ege Lee & Roider Patentanwälte

(57) **Abstract**

The present disclosure relates to a method for recovering nickel and cobalt using deep eutectic solvent-based ion exchange separation, the method including: (a) a step of dissolving nickel oxide and cobalt oxide by mixing them with a deep eutectic solvent (DES), (b) a step of speciating nickel or cobalt ions into cationic species or anionic species by mixing the solution obtained in step (a) with water to hydrate it, and (c) a step of recovering or removing the cationic species or anionic species contained in the solution obtained in step (b) by using a cationic ion exchange resin or an anionic ion exchange resin. By combining deep eutectic solvents with ion exchange separation, the present disclosure enables environmentally friendly and efficient recovery of nickel and cobalt.

## Description

### 1. Field

The present disclosure relates to a method for recovering nickel and cobalt using a deep eutectic solvent-based ion exchange separation, and more specifically, to a method for recovering nickel and cobalt in an environmentally friendly and efficient manner by combining a deep eutectic solvent and an ion exchange separation.

### 2. Background

As energy production, decommissioning, and material processing activities are rapidly growing worldwide, the amount of hazardous waste is rapidly increasing, and waste inventories are reaching critical levels. According to the IAEA, there are currently millions of cubic meters of radioactive waste worldwide, including very low-level waste (VLLW), low-level waste (LLW), intermediate-level waste (ILW), and high-level waste (HLW).

Typical types of waste contain radioisotopes (RI), metals such as nickel (Ni) and cobalt (Co), which are often produced as corrosion products of reactor components such as stainless steel. In addition to their presence in nuclear waste, Ni and Co are essential for energy storage and electronic devices, particularly lithium-ion batteries (LIBs), and are essential materials for battery performance and lifespan. Given the high cost and growing scarcity of both metals, developing efficient methods to recover them from nuclear and industrial wastes is of significant economic and environmental importance.

Meanwhile, the management of such waste involves high treatment costs and complex issues due to the need for waste volume reduction, decontamination, and difficulties in disposal. Therefore, the need for sustainable and cost-effective solutions is increasingly emphasized-extending beyond nuclear waste to encompass broader applications such as battery recycling and resource recovery from mining and industrial waste.

In this regard, Korean Patent No. 10-0772967 discloses a method for selectively separating cobalt ions from an aqueous solution containing cobalt and nickel ions, which comprises the steps of adding a thiocyanate ion (SCN⁻) source to the aqueous solution containing cobalt ions and nickel ions, followed by passing the obtained separated solution through an ion exchange column filled with a cation exchange resin to selectively adsorb the cobalt ions contained in the separated solution onto the cation exchange resin. However, unlike the present disclosure, it does not disclose a method capable of recovering nickel and cobalt in an environmentally friendly and efficient manner, which can be operated under mild conditions without the need for harsh chemical reagents or high-temperature environments, by combining a deep eutectic solvent with an ion exchange separation method.

### [PRIOR ART LITERATURE]

### [PATENT DOCUMENT]

Korean Patent No. 10-0772967

### SUMMARY

A purpose of the present disclosure is to provide a method capable of recovering nickel and cobalt in an environmentally friendly and efficient manner by combining a deep eutectic solvent and an ion exchange separation method.

In order to accomplish the above purpose, the present disclosure provides a method for recovering nickel and cobalt using deep eutectic solvent-based ion exchange separation, the method including (a) a step of dissolving nickel oxide and cobalt oxide by mixing them with a deep eutectic solvent (DES), (b) a step of speciating nickel or cobalt ions into cationic species or anionic species by mixing the solution obtained in step (a) with water to hydrate it, and (c) a step of recovering or removing the cationic species or anionic species contained in the solution obtained in step (b) by using a cationic ion exchange resin or an anionic ion exchange resin.

Further, according to the present disclosure, the method for recovering nickel and cobalt using deep eutectic solvent-based ion exchange separation is provided, wherein the deep eutectic solvent in step (a) includes a hydrogen bond acceptor (HBA) of choline chloride (ChCl), and a hydrogen bond donor (HBD) of p-toluenesulfonic acid (pTSA) or ethylene glycol (EG).

Further, according to the present disclosure, the method for recovering nickel and cobalt using deep eutectic solvent-based ion exchange separation is provided, wherein molar ratio of the hydrogen bond acceptor and the hydrogen bond donor is 1:2 to 2:1.

Further, according to the present disclosure, the method for recovering nickel and cobalt using deep eutectic solvent-based ion exchange separation is provided, wherein in step (b), the cationic species is Ni²⁺ or Co²⁺, and the anionic species is NiCl4²⁻ or CoCl4²⁻.

Further, according to the present disclosure, the method for recovering nickel and cobalt using deep eutectic solvent-based ion exchange separation is provided, further comprising a step of recycling the deep eutectic solvent obtained in step (c) by reusing it in step (a).

The method for recovering nickel and cobalt through a deep eutectic solvent (DES)-based ion exchange separation method (IX) according to the present disclosure forms stable anion complexes (e.g., NiCl₄²⁻ and CoCl₄²⁻) by coordinating Ni and Co ions with chloride ions in DES. These anionic complexes can be separated more efficiently than the hydrated forms. By combining DES with the IX process, Ni and Co can be selectively separated without the need for harsh chemical reagents or high-temperature environments typically used in conventional extraction methods, offering the advantage of operation under mild conditions.

In addition, according to the present disclosure, efficient separation of Ni and Co metals from waste can reduce the volume of waste requiring treatment. Furthermore, operating under mild conditions lowers processing costs and reduces reliance on corrosive chemical reagents, thereby enabling more environmentally friendly waste treatment.

However, the effects of the present disclosure are not limited to the effects mentioned above, and other effects not mentioned can be clearly understood by those skilled in the art from the description below.

### BRIEF DESCRIPTION OF THE DRAWINGS

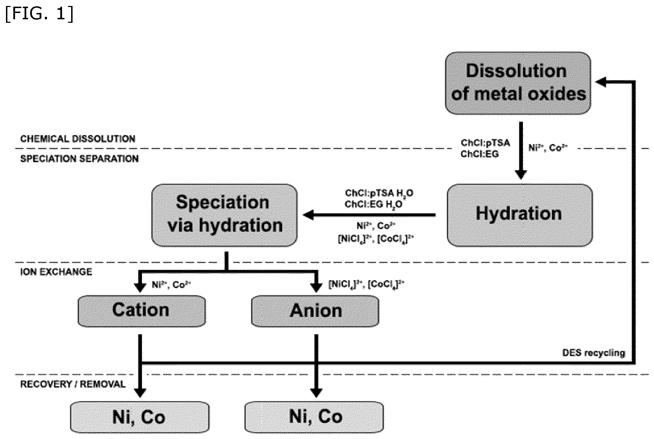

FIG. 1 is a view illustrating a process of recovering nickel and cobalt according to an embodiment of the present disclosure.
FIG. 2 is a view illustrating the dissolution percentage by pre-hydration of nickel and cobalt oxide according to an embodiment of the present disclosure.
FIG. 3 is a UV-Vis spectrum result measuring the speciation of nickel and cobalt according to various hydration rates according to an embodiment of the present disclosure.
FIG. 4 is a view illustrating the removal percentage of nickel and cobalt according to various hydration rates according to an embodiment of the present disclosure.
FIG. 5 is a view illustrating the removal percentage of nickel and cobalt according to various hydration rates according to another embodiment of the present disclosure.

### DETAILED DESCRIPTION

Hereinafter, the present disclosure will be described in more detail with reference to the attached drawings.

One aspect of the present disclosure provides a method for recovering nickel and cobalt using a deep eutectic solvent-based ion exchange separation method, comprising the steps of (a) dissolving nickel oxide and cobalt oxide by mixing them with a deep eutectic solvent (DES), (b) speciating nickel or cobalt ions into cationic species or anionic species by mixing the solution obtained in step (a) with water to hydrate it, and (c) recovering or removing the cationic species or anionic species contained in the solution obtained in step (b) by using a cationic ion exchange resin or an anionic ion exchange resin.

In the present disclosure, the step (a) is a step of dissolving nickel oxide and cobalt oxide by mixing them with a deep eutectic solvent (DES).

More specifically, in the present disclosure, the deep eutectic solvent refers to a mixture of two naturally derived substances (liquid/solid or solid/solid), which, when combined at a specific molar ratio at room temperature, exhibits a lowered melting point and forms a solution phase at temperatures at or below 40~50 °C.

The deep eutectic solvent is generally composed of a mixture of a hydrogen bond acceptor (HBA) and a hydrogen bond donor (HBD), and the chemical and physical properties of the deep eutectic solvent are determined according to the combination of the HBA and HBD.

In the present disclosure, the hydrogen bond acceptor (HBA) is preferably choline chloride (ChCl), and the hydrogen bond donor (HBD) is preferably p-toluenesulfonic acid (pTSA) or ethylene glycol (EG).

In the present disclosure, the molar ratio of the hydrogen bond donor and the hydrogen bond acceptor may be, for example, 1:2 to 2:1, but is not limited thereto.

In the present disclosure, the step (b) is a step of speciating nickel or cobalt ions into cationic species or anionic species by mixing the solution obtained in the step (a) with water and hydrating it.

In the present disclosure, when hydrated by mixing with water as described above, the metal ions of nickel or cobalt in the solution undergo speciation. For example, under 100% hydration conditions (i.e., without DES), they are speciated into Ni²⁺ or Co²⁺, whereas under 0% hydration conditions (i.e., in 100% DES), they are speciated into NiCl₄²⁻ or CoCl4²⁻.

In the present disclosure, the step (c) is a step of recovering or removing the cationic species or anionic species contained in the solution obtained in the step (b) using a cationic ion exchange resin or an anionic ion exchange resin.

In the present disclosure, for example, the recovery or removal of metal ions contained in ChCl:pTSA or ChCl:EG DES is performed by contacting the metal-DES solution with various IX media.

More specifically, according to the present disclosure, metals (e.g., Ni²⁺ and Co²⁺) can be recovered or removed from ChCl:pTSA or ChCl:EG DES by contacting the solution with a cationic IX resin medium, and metals (e.g., NiCl₄²⁻ and CoCl₄²⁻) can be recovered or removed from ChCl:pTSA or ChCl:EG DES by contacting the solution with an anionic IX resin medium.

Meanwhile, in the present disclosure, by recovering or removing metal species from, for example, ChCl:pTSA or ChCl:EG DES through the step (c), a clean DES is obtained, and thus such DES can be reused in the step (a) and recycled.

Hereinafter, the present disclosure will be described in greater detail by way of examples. However, these examples are provided for illustrative purposes only and are not intended to limit the scope of the present disclosure.

### Example 1: Experimental method

### 1-1 Chemicals

Choline chloride (≥98%), p-toluenesulfonic acid (pTSA-ACS reagent, ≥98.5%), and ethylene glycol (anhydrous, 99.8%) were purchased from Sigma Aldrich. All metal oxides used in the dissolution and separation experiments were purchased from Sigma Aldrich (99.9% trace metal basis). All nuclear grade ion exchange resins, NRW150, NRW160, PFA445, and A555, were purchased from Purolite^{™} (see Table 1). Nuclear grade means that no pretreatment of the resin is required. All reagents were used as received without further purification. The water used was purified through a Millipore system (18 ΩM).

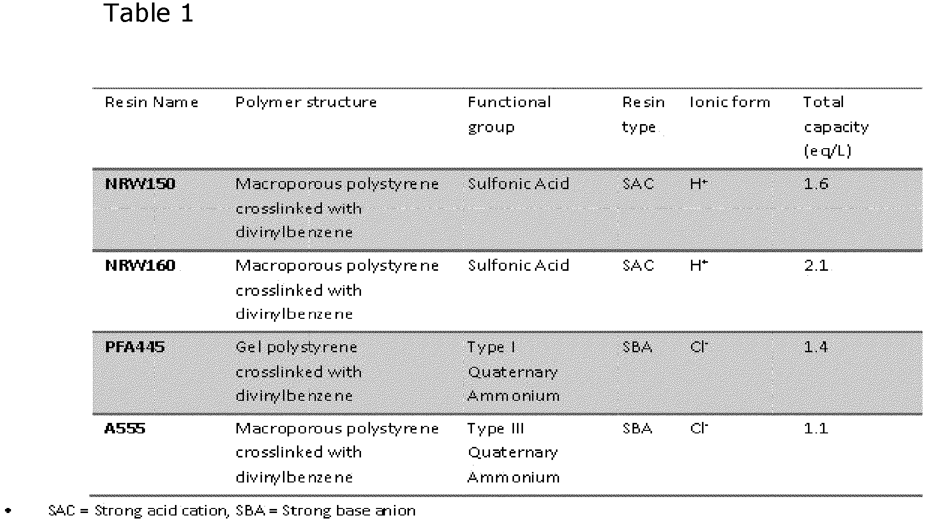

### 1-2 Synthesis of DES

ChCl-pTSA DES was synthesized by mixing pTSA and ChCl in a molar ratio of 2:1. The mixture was then heated to 60°C and stirred at 400 rpm for 2 hours to completely dissolve the components. Once the DES mixture was synthesized, it was cooled to room temperature before being used for metal dissolution. ChCl:EG DES was synthesized using a similar method, with the molar ratio adjusted to 1:2. Both DES mixtures were prepared on an open bench without atmospheric control to simulate real-world application conditions.

### 1-3 Hydration of DES

The water content was adjusted to modify the properties of DES. Adding water to DES allows the use of a medium with low viscosity, which facilitates the incorporation of IX resin. To investigate how the water content affects the dissolution of metals, the initial hydration % values were set to 0 wt% (pure DES), 20 wt%, 40 wt%, 60 wt%, and 80 wt%. Since the hydration step was performed after dissolving the metal oxide in DES, 100 wt% (pure water) was omitted. It should be noted that when the metal oxide was dissolved in 100 wt% water, almost no dissolution occurred. After hydration, the hydrated DES medium was contacted with the selected IX resin.

### 1-4 Metal dissolution and separation

The metal oxides NiO and CoO were selected for dissolution. Then, 0.1 g of the metal oxide was added to 5 mL of DES and stirred for 48 hours to ensure that all the metals were dissolved. Once dissolved, 0.1 g of IX resin (Purolite^{™} NRW150, NRW160, PFA445, and A555) was contacted with the DES-metal solution and shaken on an orbital shaker for 48 hours and left at room temperature. After 48 hours, the resin was separated from the DES solution by filtration using a syringe and syringe filter. All dissolution and separation experiments were repeated in triplicate. The supernatant was then stored and processed in 10 wt% nitric acid for inductively coupled plasma-optical emission spectroscopy (ICP-OES) analysis (ThermoScientific iCAP 6000 ICP spectrometer equipped with a CETAC ASX-520 autosampler).

### 1-5 Instrumentation

The chemical structures and successful synthesis of pTSA-ChCl and EG-ChCl DESs were analyzed using Fourier transform infrared spectroscopy (FT-IR-TENSOR27) and UV-vis (Shimadzu UV-2600i). The presence of metals on the surface of the IX resins was confirmed using scanning electron microscopy (SEM) and energy-dispersive X-ray spectroscopy (EDX). All SEM and EDX analyses were performed using an FE-SEM 7800F Prime.

### Example 2: Results and discussion

### 2-1 DES Synthesis and characterization

Choline chloride-based p-toluenesulfonic acid (ChCl:pTSA) and ethylene glycol (ChCl:EG) DESs were synthesized in a ratio of 1:2 and 2:1, respectively. The synthesized DESs, ChCl:pTSA and ChCl:EG, were analyzed by FTIR and UV-vis spectrometry to confirm the purity and successful synthesis of each DES.

### 2-2 Metal oxide leaching

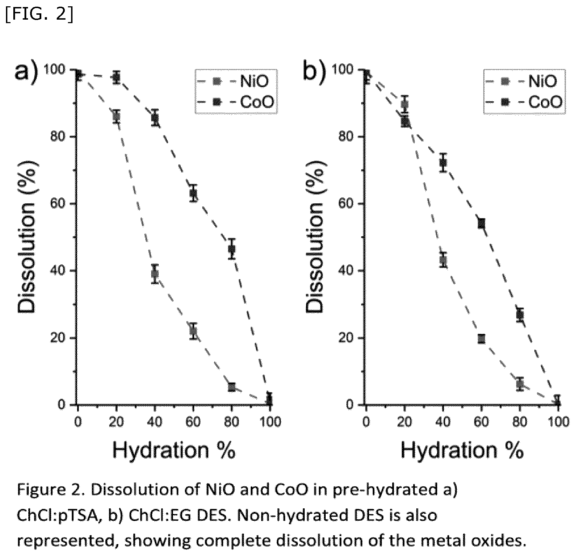

For initial testing, both ChCl: pTSA and ChCl: EG DESs were pre-hydrated before metal oxide dissolution to evaluate the dissolution efficiency. As shown in FIG. 2, the dissolution percentage generally decreased with increasing moisture content, but the initial dissolution efficiency varied depending on whether it was pre-hydrated or unhydrated. For the pre-hydrated DES (20-80% hydration), the initial dissolution efficiency was approximately 85% for both Ni and Co of the pTSA-based DES at 20% hydration. Similarly, for EG-based DES, the initial dissolution efficiency was approximately 90% for Ni and 85% for Co.

Efficient dissolution was observed upon pre-hydration, which may be due to the reduced viscosity and improved mass transfer of metals in each DES. However, the dissolution efficiency began to decline when the hydration rate exceeded 20%, and at 100% hydration, the metal oxides (metal oxides dissolved only in water) were minimally or not dissolved. In ChCl:pTSA, NiO was dissolved less efficiently than CoO, while in ChCl:EG, NiO was dissolved more efficiently than CoO. This may be because CoO is more readily dissolved in more acidic media. However, complete dissolution did not occur due to the solubility limitations of the oxides in water.

However, complete dissolution was achieved when the metal oxides were dissolved in pure DES (FIG. 2). Hydration of these metal-DES solutions facilitated the next IX step. It is important to note that as the hydration level increases, the metal oxide concentration decreases, thus it is necessary to normalize the ICP results to account for the addition of IX resin and the lower metal oxide concentration, which allows the actual % dissolved to be calculated.

### 2-3 Speciation of metal complexes upon hydration

The coordination chemistry of Ni and Co is strongly affected by the solvation environment, resulting in the formation of different species in water and DES. In 100% water, Ni²⁺ and Co²⁺ exist as hydrated cations, whereas in 100% DES they primarily form anionic chloride complexes. This difference in solvation not only governs the chemical behavior, but also influences the electronic transitions that are observable via UV-Vis spectroscopy.

### 2-3-1 Speciation in pure water

In a pure aqueous environment, Ni²⁺ and Co²⁺ are stabilized as hydrated metal cations, as expected, and both ions form octahedral complexes in which six water molecules coordinate around the metal center to produce the major species, Ni(H₂O)₆²⁺ and Co(H₂O)₆²⁺. The hydration of these ions occurred due to the strong ion-dipole interaction between the metal cations and the surrounding water molecules. At higher pH, hydroxide complexes such as [Ni(OH)]⁺ or [Co(OH)]⁺ can be formed, but the hexaaqua complex remains dominant under neutral or slightly acidic conditions.

### 2-3-2 Speciation in pure DES

In contrast, the DES environment promoted the formation of anion chloride complexes due to the high chloride ion concentration. For example, in choline chloride-based DES, Ni²⁺ and Co²⁺ coordinated with chloride ions to form complexes such as [NiCl₄]²⁻ and [CoCl₄]²⁻. The tetrahedral coordination geometry stabilized by chloride ions was favored because of the ionic interactions between the metal centers and the chloride ligands. Depending on the specific DES and water content, mixed coordination species such as [CoCl₄(H₂O)₂]²⁻ can also potentially be formed, reflecting the dynamic solvation properties of the hydrated DES system. Notably, Ni²⁺ has a smaller ionic radius and higher charge density compared to Co²⁺, which may allow it to form higher coordination states such as [NiCl₆]⁴⁻ under certain conditions.

### 2-3-3 UV-Vis: Coordination and electronic transitions

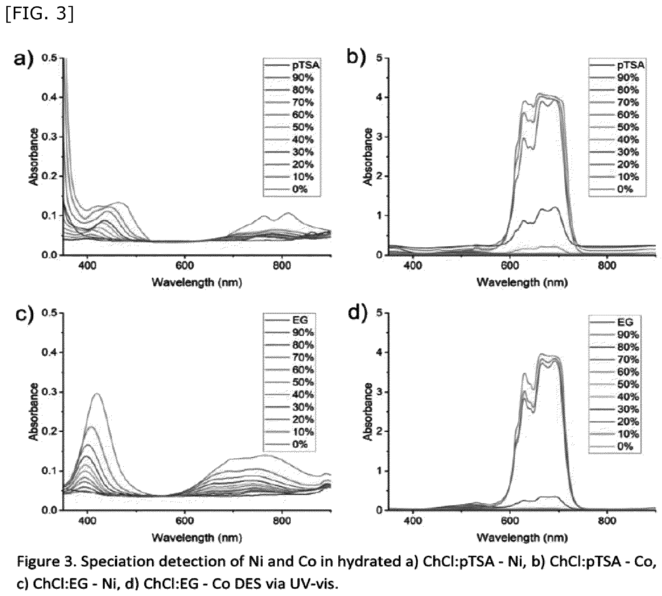

The species of Ni and Co in water and DES significantly affect the UV-Vis spectra, reflecting the different electronic environments of each solvent. In water, both Co²⁺ and Ni²⁺ exhibited characteristic d-d transitions within the octahedral coordination structure. The Ni hexaaqua complex, [Ni(H₂O)₆]²⁺, showed absorption bands at 390~430 nm and 600~700 nm (FIGs. 3a and c). The Co hexaaqua complex, [Co(H₂O)₆]²⁺, absorbed weakly in the range of 510~530 nm, corresponding to the ⁴T₁g(F) → ⁴T₁g(P) transition (FIGs. 3b and d).

The UV-Vis spectra of Ni²⁺ and Co²⁺ in DES are dominated by the ligand-metal charge transfer (LMCT) and the d-d transitions of the chloride complexes. For Ni, the [NiCl₄]²⁻ form absorbs more strongly than in water, with absorption bands shifting to 700~800 nm and 500~600 nm, resulting in a yellow-green color (FIGs. 3a and c). This stronger absorption band and the shift of the band to the right in DES arise from the more allowed d-d transition in the tetrahedral geometry and the strong coordination with chloride. For cobalt, the [CoCl₄]²⁻ complex shows a strong absorption in the range of 600~700 nm due to the ⁴A₂(F) → ⁴T₁(P) transition, resulting in a characteristic intense blue color (FIGs. 3b and d).

### 2-3-4 Effect of Hydration on speciation in DES

The addition of water to DES introduced a competitive solvation environment, which changed the coordination geometry and speciation of the metal ion. As the hydration level increased, there was a gradual shift from the chloride-coordinated species to the hydrated species. Co in EG-based DES exhibited a change in speciation at approximately 30% hydration, with Co(H₂O)₆²⁺ being the dominant species. In contrast, Co in pTSA-based DES exhibited a similar transition at approximately 40% hydration, indicating that potential differences in HBD components influence the stability of the chloride complexes and the individual complexes formed.

Ni exhibited a similar trend, but the change in speciation was less pronounced, especially in pTSA-based DES. These subtle hydration-induced speciation changes may be consistent in the separation process. For example, IX resins can be used to selectively separate Ni and Co based on their coordination preferences in these DES environments, since metal ions exhibit different affinities for chloride versus water ligands. Recent studies have highlighted this speciation using similar conditions, but the present disclosure focused solely on speciation, and separations via speciation were performed by maintaining the metal chloride concentration as the water content increased.

### 2-3-5 Potential for Co and Ni separation via IX

Differences in Ni and Co speciation between water and DES, as well as their transitions upon hydration, provide opportunities for selective separation strategies. IX resins can separate Ni from Co by exploiting the differing binding affinities of the metal species. For example, Ni may form more stable chloride complexes in DES compared to Co, allowing selective adsorption onto specific resins having the right functional groups. The shifts in coordination as a function of hydration further enhance the potential for tailored separation processes, as the unique solvation environments of Ni and Co can be selectively targeted to remove Ni²⁺ and Co²⁺ ions.

The distinct species of Ni and Co in water and DES environments, as well as their corresponding UV-Vis absorption properties, provide a foundation for understanding their chemical behavior and interactions in these novel DES solvents. Table 2 summarizes the differences in coordination species and UV-Vis absorption of Co and Ni in both water and DES.

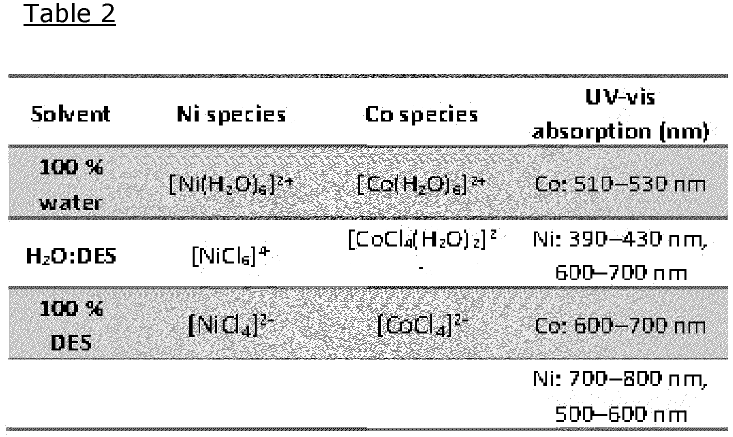

### 2-4 Single metal absorption using ion exchange resins

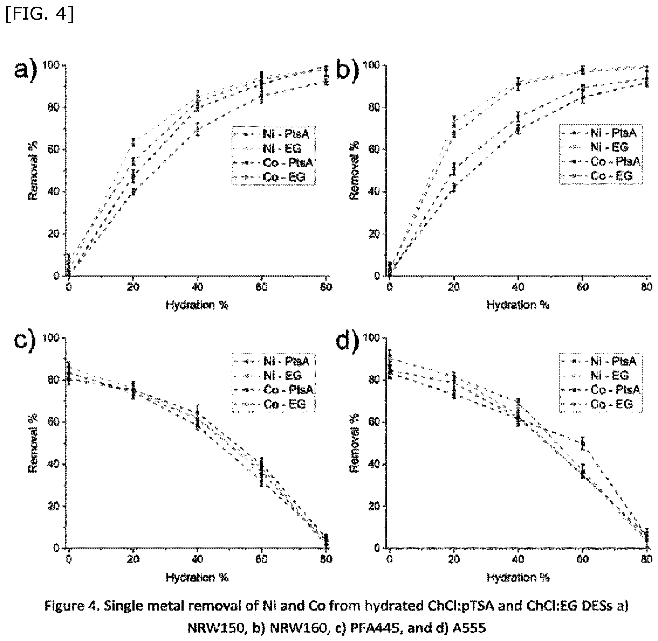

DES solutions containing Ni and Co were subjected to batch IX experiments using the following resins: Purolite^{™} NRW150 and NRW160, cation resins, and PFA445 and A555, anion resins. Each IX resin was individually contacted with the metal oxide-DES solution for 48 hours, and each experiment was performed in triplicate. The percent removal of the metal species is shown in FIG. 4.

For the cation exchange resins NRW150 and NRW160 (FIGs. 4a and b), minimal removal of Ni and Co was observed at 0% hydration in both pTSA and EG-based DESs. This is due to the speciation of Ni and Co, as the metals primarily exist in the anionic form ([NiCl₄]²⁻, [CoCl₄]²⁻) at 0% hydration. As the hydration level increases, more cationic species (Ni²⁺, Co²⁺) are generated, which can be effectively removed by the cation resin. At higher hydration levels, 80~100% of Ni and Co were removed using the cation exchange resin in both pTSA and EG DESs, and EG showed slightly higher removal efficiency for both metals than pTSA.

Similar trends were observed in the anion exchange resins PFA445 and A555 (FIGs. 4c and d). At 0% hydration, the anion forms of Ni and Co ([NiCl₄]²⁻, [CoCl₄]²⁻) were effectively removed. However, as the hydration increased, the proportion of anionic species decreased, which decreased the removal efficiency. The main reason for this is that when water is injected, the DES components are dissociated, generating more hydrated forms of Ni and Co that are incompatible with the anion resin. Even at 0% hydration, it was not possible to completely remove Ni and Co with the anion resin. This is most likely due to mass transfer limitations, as the high viscosity of the unhydrated DES hinders the diffusion of the metal species. The calculated maximum theoretical ion exchange capacities (IECs) for each resin, NRW150, NRW160, PFA445, and A555, are 46.95, 61.63, 41.08, and 32.28 g/L, respectively, showing that the amount of metal in the solution is less than the maximum capacity of the resin, indicating that the viscosity is causing the problem. ChCl:EG showed slightly improved removal efficiency compared to ChCl: pTSA, which may be due to the lower viscosity of the former.

### 2-5 Multimetal absorption using ion exchange resins

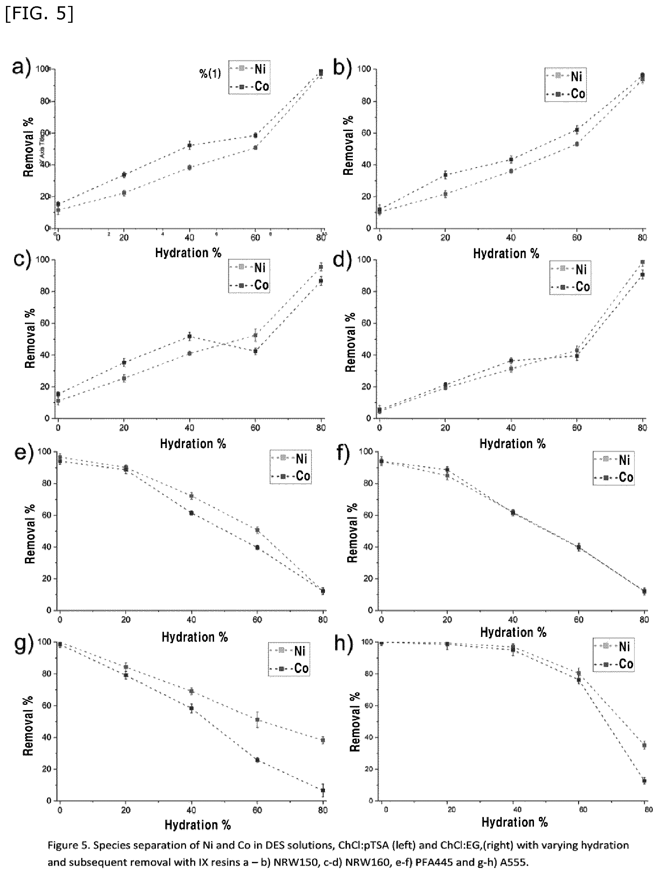

The separation, recovery, or removal of Ni and Co are all critically important for the nuclear activation and corrosion species, recovering resources from spent LIB cathode materials, and general mining. Therefore, the potential for separating and recovering Ni and Co using DES-IX was investigated. Both Ni and Co were dissolved in DES solutions to prepare stock solutions of Ni and Co containing ChCl:pTSA and ChCl:EG DES. These solutions were re-applied to batch IX experiments using the same resins as mentioned above, Purolite^{™} NRW150, NRW160, PFA445, and A555. Each IX resin was individually contacted with the metal oxide-DES solution for 48 hours, and each experiment was performed in triplicate. The percent removal of the metal species is presented in FIG. 5.

The selective absorption of Co²⁺ and Ni²⁺ ions using cation and anion exchange resins in DES is determined by factors such as hydration level, ion complexation, and resin type. These considerations affect how Co and Ni interact with the resin, depending on the complexation with the DES components or chloride ions as well as the ion mobility within varying hydration levels.

### 2-5-1 Ni²⁺ and Co²⁺ absorption of cation exchange resins

For cation exchange resins that directly adsorb positively charged species, the absorption of Ni²⁺ and Co²⁺ is directly affected by the ion mobility and the stability of the complex within the DES. The viscosity of the DES, driven by the water content, plays an important role in controlling the transport of metal ions to the resin sites.

At low hydration levels (0-30%), the high viscosity of the solution and the strong coordination interactions between the metal ions and the DES components restrict ion mobility, thereby limiting resin absorption. Co is less likely to form stable complexes in DES than Ni due to ligand field stabilization. That is, Co can be more easily used for exchange and may therefore be preferentially absorbed over Ni. However, the formation of chloride complexes ([NiCl₄]²⁻ and [CoCl₄]²⁻) prevents efficient exchange of the cation resin at 0% hydration. As the hydration increases to 0% or above, a small amount of removal of both Ni and Co is observed in ChCl:pTSA and ChCl:EG (FIG. 5a-d).

At moderate hydration (30-60%), the viscosity decreases, which allows for greater ion solvation and mobility. FIGs. 3b and c show a significant drop in the speciation peak intensity of the Co ion in both ChCl:pTSA and ChCl:EG, with more Ni²⁺ and Co²⁺ ions being formed. As the Ni²⁺ and Co²⁺ ions are now more readily available for exchange, less [NiCl₄]²⁻ and [CoCl₄]²⁻ species are formed. However, the removal appears to converge toward Co removal, as Ni²⁺ tends to form stronger interactions with the resin due to its higher charge density and smaller ionic radius. This change favors Ni²⁺ absorption over Co²⁺ as the constraints on mobility are alleviated.

At high hydration levels (60-80%), DES viscosity decreases significantly and metal ions become well solvated. Co²⁺ and Ni²⁺ are once again more readily available for exchange, but Ni²⁺ generally exhibits stronger binding to the resin than Co²⁺ due to its charge density and affinity for the active sites on the resin. FIGs. 5a and b show a complete convergence of Ni and Co removal, indicating less competition between the two individual ions for sites on the IX resin at 80-100% hydration. The cation exchange resin exhibited more favorable exchange with Co²⁺ at low moisture content due to weaker complexation, whereas Ni²⁺ absorption increased at higher moisture levels where it was more efficiently bound.

### 2-5-2 Absorption of anion exchange resins via anion complexes

For anion exchange resins, the absorption of Co and Ni depends on the formation of anion complexes, as these resins are designed to adsorb negatively charged species. In chloride-rich DES solutions, Co²⁺ and Ni²⁺ can form [NiCl₄]²⁻ and [CoCl₄]²⁻ anionic species, which can be adsorbed onto the resin. The stability and availability of these anion complexes are highly dependent on the moisture content of the DES, which affects the competition between Co and Ni absorption.

At low hydration rates (0-30%), high chloride concentrations are present, leading to stable metal ion formation with anion complexes [NiCl₄]²⁻ and [CoCl₄]²⁻. Ni generally forms more stable chloride complexes due to its higher charge density and tendency to strongly coordinate with chloride ions, and [NiCl₄]²⁻ is preferred for absorption by the resin, as shown in FIG. 5e-h.

At moderate hydration (30-60%), solvation is introduced, weakening the stability of the chloride complex. Nevertheless, Ni absorption is likely still favored, as Ni²⁺ maintains a more stable complex with chloride than Co²⁺, but as solvation destabilizes the complex, the gap between Ni and Co absorption begins to narrow. This is primarily due to increased dissociation of DES components.

When hydration is 60-80%, the chloride complex becomes unstable as solvation competes with chloride coordination, making Co²⁺ and Ni²⁺ ions more available as free solvated cations. Since the resin is designed for anionic species, there is a lack of stable [NiCl₄]²⁻ and [CoCl₄]²⁻ complexes, resulting in minimal absorption, as shown in FiG. 5e-h.

### 2-5-3 Comparative absorption

In DES solutions with low water content, the cation exchange resin primarily captures Co²⁺, while the anion exchange resin favors the [NiCl₄]²⁻ complex due to differences in the stability of complex formation. As the hydration level increases, solvation reduces viscosity, enhances ion mobility, and promotes dissociation of metal-chloride complexes. These changes lead the cation exchange resin to prefer the absorption of Ni²⁺ over that of Co²⁺, whereas anion exchange resins show an overall decrease in absorption due to the destabilization of the required chloride complexes.

In general, the cation exchange resins did not exhibit significant differences in removal efficiencies between pTSA and EG DESs. However, in the case of the anion exchange resins, especially A555, high removal efficiencies were observed for both Ni and Co up to a maximum of 40-60% hydration. This can be attributed to the competition between the cation and anion forms of the metal species, which can be influenced by the species change (availability of Cl⁻ in DES) as hydration increases. The delayed transition from anion to cationic species with increasing hydration can further explain the observed trend.

### 2-6 Conclusions

The present disclosure successfully demonstrated the dissolution, speciation, and removal of Ni and Co using DES at various hydration levels. In the initial tests, dissolution efficiencies peaked at approximately 20% hydration, achieving 75-80% or above for all of both metals using pre-hydrated DES. Further, complete dissolution was achieved at 100% DES, and the produced solution could be hydrated to render the metals fully available for subsequent IX processing.

The speciation of Ni and Co was significantly affected by the hydration environment. In 100% water, both metals exist as hydrated cations ([(Ni(H₂O)₆]²⁺ and [Co(H₂O)₆]²⁺), whereas in 100% DES, they primarily formed anionic chloride complexes ([NiCl₄]²⁻ and [CoCl₄]²⁻). As the hydration level increased, the species coordinated to chloride shifted to the hydrated form, facilitating selective separation strategies using IX resins.

The present disclosure further confirmed that the cation exchange resin effectively removes Ni²⁺ and Co²⁺ at higher hydration levels, whereas the anion exchange resin initially captures the anionic species. However, as hydration increases, the stability of these anion complexes decreases, which affected the removal efficiency. Overall, the results of the present disclosure indicate that a tailored separation process that utilizes the unique solvation environment of Ni and Co can enhance recovery and resource management efforts in a variety of application fields and support circular economy principles by enabling resource recycling and reuse, thereby minimizing environmental impact.

From the above description, it will be understood by those skilled in the art to which the present disclosure pertains that the present disclosure can be implemented in other specific forms without changing the technical spirit or essential characteristics thereof. In this regard, it should be understood that the embodiments described above are illustrative in all respects and not restrictive. The scope of the present disclosure should be interpreted that all changes or modifications derived from the meaning and scope of the following claims and their equivalent concepts rather than the above detailed description are included within the scope of the present disclosure.

## Claims

1. A method for recovering nickel and cobalt using deep eutectic solvent-based ion exchange separation, the method comprising:
(a) a step of dissolving nickel oxide and cobalt oxide by mixing them with a deep eutectic solvent (DES),
(b) a step of speciating nickel or cobalt ions into cationic species or anionic species by mixing the solution obtained in step (a) with water to hydrate it, and
(c) a step of recovering or removing the cationic species or anionic species contained in the solution obtained in step (b) by using a cationic ion exchange resin or an anionic ion exchange resin.

2. The method according to claim 1,
wherein the deep eutectic solvent in step (a) comprises a hydrogen bond acceptor (HBA) of choline chloride (ChCl), and a hydrogen bond donor (HBD) of p-toluenesulfonic acid (pTSA) or ethylene glycol (EG).

3. The method according to claim 2,
wherein molar ratio of the hydrogen bond acceptor and the hydrogen bond donor is 1:2 to 2:1.

4. The method according to claim 1,
wherein in step (b), the cationic species is Ni²⁺ or Co²⁺, and the anionic species is NiCl4²⁻ or CoCl4²⁻.

5. The method according to claim 1,
further comprising a step of recycling the deep eutectic solvent obtained in step (c) by reusing it in step (a).
